(19) Europäisches Patentamt / European Patent Office / Office européen des brevets

(11) **EP 2 661 649 B1**

(12) **FASCICULE DE BREVET EUROPEEN**

(45) Date de publication et mention de la délivrance du brevet:
**15.02.2017 Bulletin 2017/07**

(21) Numéro de dépôt: **12700018.0**

(22) Date de dépôt: **03.01.2012**

(51) Int Cl.:
**G02B 5/20** (2006.01)          **G02B 5/28** (2006.01)
**G02B 5/18** (2006.01)          **G02B 6/34** (2006.01)

(86) Numéro de dépôt international:
**PCT/EP2012/050051**

(87) Numéro de publication internationale:
**WO 2012/093119 (12.07.2012 Gazette 2012/28)**

(54) **FILTRE OPTIQUE A RESEAUX RESONNANTS INSENSIBLE A LA POLARISATION ACCORDABLE EN FONCTION DE L'ANGLE D'INCIDENCE**

WELLENLÄNGENDURCHSTIMMBARER UND POLARISATIONSUNABHÄNGIGER AUF GITTERRESONANZ BASIERENDER OPTISCHER FILTER

WAVELENGTH TUNABLE POLARISATION INDEPENDENT OPTICAL RESONANT GRATING FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.01.2011 FR 1150021**

(43) Date de publication de la demande:
**13.11.2013 Bulletin 2013/46**

(73) Titulaires:
- **Centre National d'Etudes Spatiales**
  **75001 Paris (FR)**
- **Centre National de la Recherche Scientifique (C.N.R.S.)**
  **75016 Paris (FR)**

(72) Inventeurs:
- **MONMAYRANT, Antoine**
  **F-31200 Toulouse (FR)**
- **GAUTHIER-LAFAYE, Olivier**
  **F-31400 Toulouse (FR)**
- **CHAN SHIN YU, Kristel**
  **F-31520 Ramonville Saint Agne (FR)**
- **FEHREMBACH, Anne-Laure**
  **F-13013 Marseille (FR)**
- **SENTENAC, Anne**
  **F-13005 Marseille (FR)**
- **ARGUEL, Philippe**
  **F-31400 Toulouse (FR)**
- **LOESEL, Jacques**
  **F-31120 Goyrans (FR)**

(74) Mandataire: **Regimbeau**
**20, rue de Chazelles**
**75847 Paris Cedex 17 (FR)**

(56) Documents cités:
**EP-A1- 1 767 964     FR-A1- 2 856 804**

- **FEHREMBACH A-L ET AL: "Study of waveguide grating eigenmodes for unpolarized filtering applications", 1 mars 2003 (2003-03-01), JOURNAL OF THE OPTICAL SOCIETY OF AMERICA A, OPTICAL SOCIETY OF AMERICA, US, PAGE(S) 481 - 488, XP002272834, ISSN: 1084-7529 le document en entier**
- **MIZUTANI A ET AL: "Nonpolarizing guided-mode resonant grating filter for oblique incidence", 1 juin 2001 (2001-06-01), JOURNAL OF THE OPTICAL SOCIETY OF AMERICA. A, OPTICS AND IMAGE SCIENCE, OPTICAL SOCIETY OF AMERICA, US, PAGE(S) 1261 - 1266, XP002272835, ISSN: 0740-3232 le document en entier**

**Description**

DOMAINE TECHNIQUE GENERAL

L'invention concerne les filtres optiques en espace libre, à base de réseaux résonnants, ultra-sélectifs en longueur d'onde, (c'est-à-dire ayant une bande passante inférieure à 1 nm) accordables en fonction de l'angle d'incidence. De tels filtres sont aussi connus sous le nom de filtres à résonance de mode guidé ou bien filtres à résonance de Fano.

ETAT DE LA TECHNIQUE

Les filtres optiques à réseaux résonnants sont des composants optiques de filtrage en longueur d'onde permettant d'obtenir une bande passante très étroite (de l'ordre de $10^{-10}$ mètres) et un taux de réjection très élevé.

Et lorsque la bande passante est très étroite, ils sont utilisés en spectroscopie Raman ou pour la sécurité Laser dans certains appareils optiques.

Les filtres optiques à réseaux résonnants sont des structures composées d'un réseau sub-longueur d'onde gravé sur une structure multi-couches.

Le réseau permet un couplage via un ordre de diffraction évanescent, de l'énergie d'un faisceau incident en espace libre vers un mode optique de la structure multi-couches qui fait office de guide d'onde. On parle aussi d'excitation du mode optique. On précise qu'un mode optique est caractérisé par son champ électromagnétique et sa relation de dispersion (relation entre la longueur d'onde du mode et la direction de propagation de l'onde incidente). Le réseau permet aussi le découplage du mode optique vers l'espace libre dans une direction correspondant à la réflexion spéculaire sur la surface.

Ce couplage/découplage n'est bien sûr réalisé que pour une longueur d'onde et une direction d'incidence fixée (liés par la relation de dispersion). Les autres longueurs d'onde traversent le filtre sans déviation.

Ainsi, on peut obtenir des filtres optiques sélectifs en longueur d'onde qui peuvent être extrêmement étroits et qui sont accordables en longueur d'onde en fonction de l'angle d'incidence.

On précise ici qu'un filtre est dit accordable, si sa longueur d'onde de filtrage peut être modifiée en jouant sur un paramètre de la structure (indice optique, épaisseur des couches, etc.) ou sur un paramètre d'incidence.

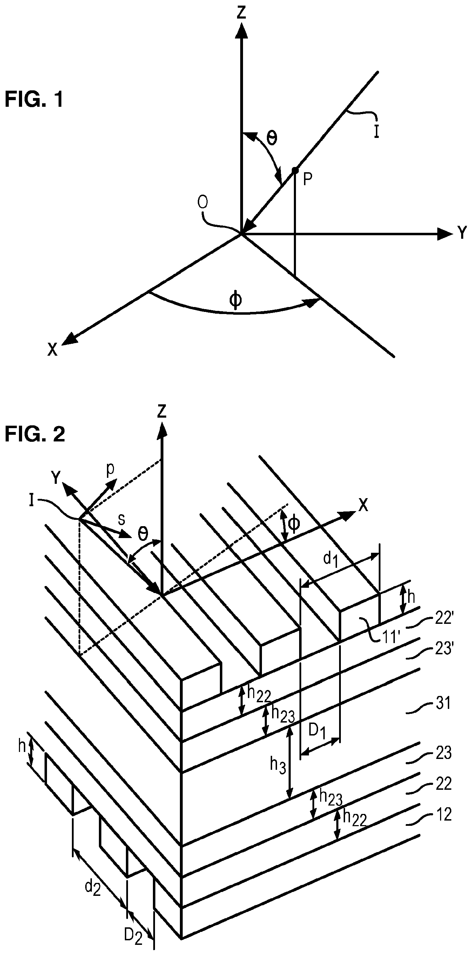

Dans ce qui suit on définit une base Oxyz dans laquelle on considère un faisceau incident I et $\theta$ et $\phi$ les coordonnées angulaires d'un point P appartenant au faisceau incident I. $\theta$ est l'angle polaire c'est-à-dire l'angle entre l'axe Oz et le rayon OP et $\phi$ l'angle azimutal c'est-à-dire l'angle de la projection OP sur le plan (xOy) avec l'axe Ox. On définit en outre le plan d'incidence comme étant le plan contenant la normale (Oz) au plan des couches, et le rayon OP. La figure 1 illustre les conventions utilisées ici.

Un problème rencontré avec ces filtres est leur dépendance à la polarisation notamment en incidence oblique.

On précise ici qu'un filtre est dit sensible à la polarisation si la longueur d'onde de centrage et la largeur de sa réponse spectrale varient en fonction de l'état de polarisation de l'onde incidente. On définit, pour un filtre en transmission (resp. en réflexion), la dépendance à la polarisation par le rapport entre la transmission (resp. la réflexion) minimale et la transmission (resp. la réflexion) maximale lorsque l'état de polarisation de l'onde incidente décrit l'ensemble des états de polarisation accessibles (en anglais, «*Polarization Dispersion Losses*», (PDL)). Cette mesure est généralement exprimée en dB, et est idéalement de 0 dB pour un composant insensible à la polarisation.

En outre, si les relations de dispersion de deux modes présentent un point d'intersection, alors les modes sont dits dégénérés en ce point.

On connaît des filtres à réseaux résonnants insensibles à la polarisation qui reposent sur l'excitation simultanée par les ondes s et p incidentes, via deux ordres de diffraction différents du réseau, de deux modes orthogonaux dégénérés pour une seule longueur d'onde. Les deux modes orthogonaux peuvent être un couple de modes dont le champ est symétrique/anti-symétrique par rapport au plan d'incidence, qui doit donc être un plan de symétrie de la structure. La dégénérescence est obtenue lorsque le couplage des modes entre eux est annulé, par l'une des deux techniques suivantes :

- soit en choisissant le motif du réseau tel qu'on ait un couplage nul entre les ordres de diffractions du réseau permettant d'exciter chaque mode, tout en maintenant un couplage non nul entre l'onde incidente et chaque mode (condition réalisable facilement avec un réseau périodique selon une seule direction, et nécessitant des motifs complexes pour un réseau périodique selon deux directions) ;
- soit en choisissant l'angle d'incidence polaire (l'angle d'incidence azimutal est, lui, fixé de telle sorte que le plan d'incidence soit un plan de symétrie de la structure) de telle sorte que l'angle entre les directions de propagation des deux modes est proche de $\lambda/2$ radians (condition irréalisable avec un réseau périodique selon une seule direction, et réalisable avec un réseau périodique selon deux directions orthogonales ou faisant un angle de $\lambda/3$ radians).

Par ailleurs, on sait que dans ce type de configuration, la bande passante du filtre est insensible à la polarisation si l'angle entre les directions de propagation des deux modes est proche de $\lambda/2$ radians, ce que favorise la deuxième technique précédemment décrite et des réseaux périodiques selon deux directions. Cependant, l'orthogonalité entre les directions de propagation des modes n'est obtenue que pour un angle d'incidence polaire, ce qui rend ces filtres difficilement accordables en longueur d'onde.

Des filtres optiques à résonance de mode guidé, insensibles à la polarisation, sont connues des documents FR-A1-2856804 et EP1767964.

## PRESENTATION DE L'INVENTION

Un objectif de l'invention est un filtre à réseaux résonnants insensible à la polarisation quel que soit l'angle d'incidence et accordable en longueur d'onde en fonction de l'angle d'incidence.

Pour atteindre cet objectif, l'invention concerne un filtre optique insensible à la polarisation centré sur une longueur d'onde mesurée dans le vide, comprenant :

- un premier et un second guides d'ondes supportant chacun un mode de propagation;
- un premier réseau formé dans ou sur la surface du premier guide d'onde, le premier réseau étant périodique au moins selon un premier axe Ox définissant une première base orthonormée Oxyz ;
- un second réseau formé dans ou sur la surface du second guide d'onde, le second réseau étant périodique au moins selon un second axe Oy' définissant une seconde base orthonormée Ox'y'z.

Le filtre optique selon l'invention est tel que le premier et le second réseaux sont disposés l'un au-dessus de l'autre et sont tels que le premier axe Ox et le second axe Oy' forment un angle de $\pi/2 + \xi$ radians de manière à ce que lorsque le premier réseau est éclairé par un faisceau lumineux, les premier et second modes de propagation sont excités, et leurs champs sont orthogonaux pour un angle d'incidence du faisceau lumineux déterminé.

D'autres aspects du filtre optique selon l'invention sont les suivants :

- le premier réseau et le second réseaux sont identiques et comportent chacun une série de motifs ou rainures identiques de période $d=d_1=d_2$ et dans lequel l'angle $\xi$ est tel que, pour un faisceau incident d'angle d'incidence quelconque sur le premier réseau, pour l'angle polaire $\theta$, correspondant au faisceau incident, variant de $-\pi/2$ à $\pi/2$ radians, l'angle azimutal $\phi$, correspondant au faisceau incident égal à $\pi/4 + \xi/2$ radians;
- la série de motifs ou rainures identiques sont de largeur D, et de hauteur h;
- la longueur d'onde est égale à $\lambda_0 = 1,6 \mu m$, les réseaux ont des rainures de période d=838 nm, de largeur D=300 nm et de hauteur h=70nm ;
- le premier guide d'onde et le second guide d'onde sont identiques et sont chacun constitués par une pluralité de couches en matériau transparents à la longueur d'onde d'intérêt ;
- le premier guide d'onde et le second guide d'onde sont constitués chacun par deux couches de matériau diélectrique d'indice de réfraction différent ;
- il comprend un substrat de verre disposé entre le premier guide d'onde et le second guide d'onde ;
- il comprend des réseaux de dimension de périodicité supérieure à un (réseaux 2D) ;
- il comprend un substrat de verre disposé entre le premier réseau et le second réseau ;
- il comprend un substrat de verre disposé entre le premier réseau et le second guide d'onde.

La combinaison de deux guides d'ondes supportant chacun un mode de propagation avec la mise en cascade de deux réseaux résonnants unidimensionnels agencés l'un par rapport à l'autre permet de répondre à la fois au besoin d'indépendance à la polarisation et d'accordabilité en longueur d'onde en fonction des angles d'incidence polaire et azimutal.

Le découplage entre les deux ensembles (réseau plus guide d'onde) est tel que les modes sont dégénérés quel que soit l'angle d'incidence polaire du faisceau incident, pour un angle azimutal donné, qui dépend en général de l'angle polaire.

Ainsi, les deux réseaux couplent le faisceau incident dans un guide d'onde pour la même longueur d'onde de résonance quel que soit l'angle d'incidence polaire. De plus, pour un angle d'incidence polaire, les modes sont orthogonaux, ce qui permet ainsi d'obtenir l'indépendance à la polarisation.

En particulier, lorsque les deux guides d'ondes et les deux réseaux sont identiques, l'angle azimutal pour lequel les deux modes sont dégénérés ne dépend pas de l'angle polaire et est tel que le plan d'incidence contient la bissectrice des directions de périodicité. L'accordabilité est alors réalisée en faisant varier l'angle d'incidence polaire seulement, l'angle d'incidence azimutal (et donc le plan d'incidence) étant fixe, ce qui représente un avantage majeur pour la mise en oeuvre du filtre. De plus, comme dans le cas général, pour un angle d'incidence polaire, les modes sont orthogonaux, ce qui permet ainsi d'obtenir l'indépendance à la polarisation.

Cette propriété est conservée sur un large intervalle d'angles d'incidence polaire.

La mise en oeuvre de résonnants unidimensionnels est plus simple que la mise en oeuvre de réseaux bidimensionnels.

De plus, comme les réseaux sont unidimensionnels l'angle d'incidence nominal peut être simplement modifié en jouant sur les paramètres des réseaux (période et orientation des réseaux) contrairement aux filtres optiques mettant en oeuvre des réseaux bidimensionnels qui nécessitent de modifier la forme du réseau bidimensionnel ainsi que la structure du guide d'onde sous-jacent.

## PRESENTATION DES FIGURES

D'autres caractéristiques et avantages de l'invention ressortiront encore de la description qui suit laquelle est purement illustrative et non limitative et doit être lue en regard des dessins annexés sur lesquels, outre la figure 1 déjà discutée :

- la figure 2 illustre schématiquement une vue partielle tridimensionnelle d'un filtre optique conforme à l'invention;

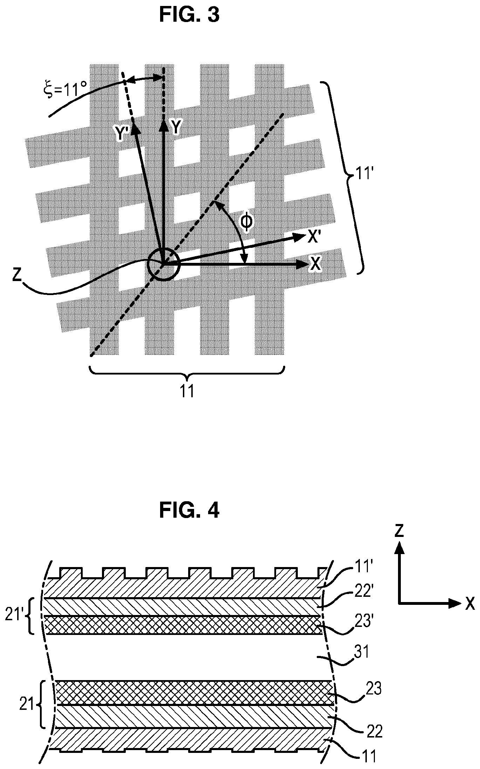

- la figure 3 illustre schématiquement l'orientation des deux réseaux d'un filtre optique conforme à l'invention;
- la figure 4 illustre une vue de face d'un filtre optique conforme à l'invention;
- la figure 5 illustre les coefficients de réflexion minimal et maximal obtenus lorsque l'état de polarisation de l'onde incidente décrit l'ensemble des états de polarisation accessibles en fonction de la longueur d'onde de travail d'un filtre optique conforme à l'invention.

Sur l'ensemble des figures, les éléments similaires portent des références numériques identiques.

## DESCRIPTION DETAILLEE DE L'INVENTION

Le filtre optique ici décrit fonctionne en espace libre et est centré sur une longueur d'onde $\lambda_0$ mesurée dans le vide, il est insensible à la polarisation.

Le filtre optique est éclairé avec un faisceau incident I de lumière large spectralement.

Une part spectralement étroite, de ce faisceau, est centrée à la longueur d'onde d'intérêt $\lambda_0$ (mesurée dans le vide) et est réfléchie spéculairement tandis que le reste sera transmis sans être affecté.

Le filtre optique, conçu pour une longueur d'onde de conception et un angle de conception (pouvant être nul ou non), est insensible à la polarisation du faisceau incident et la longueur d'onde $\lambda_0$ de filtrage peut être modifiée en changeant l'angle d'incidence (accordabilité angulaire).

Le filtre optique est principalement constitué de deux réseaux 11, 11' disposés de part et d'autre d'un substrat transparent 31 et couplés, chacun, à un guide d'onde 21, 21'.

Chaque guide d'onde supporte un mode de propagation, d'indice effectif $n_{f1}$ pour le premier et $n_{f2}$ pour le second.

Un premier réseau 11 plan est formé dans ou sur la surface du premier guide d'onde 21, et est périodique de période $d_1$ selon un premier axe Ox définissant une première base orthonormée Oxyz.

Un second réseau 11' est plan formé dans ou sur la surface du second guide d'onde 21', et est périodique période $d_2$ selon un second axe Oy' définissant une seconde base orthonormée Ox'y'z.

Les réseaux sont disposés l'un par rapport à l'autre de telle sorte que le premier axe Ox et le second axe Ox' forment un angle $\xi$ non nul.

On définit les vecteurs $\mathbf{V}_1$ et $\mathbf{V}_2$ :

$$\mathbf{V}_1 = \left[ \sin(\theta)\cos(\phi) - \frac{n\lambda}{d_1} \right] \hat{\mathbf{x}} + \left[ \sin(\theta)\sin(\phi) \right] \hat{\mathbf{y}}$$

$$\mathbf{V}_2 = \left[ \sin(\theta)\cos\left(\frac{\pi}{2} - \phi + \xi\right) - \frac{m\lambda}{d_2} \right] \hat{\mathbf{y}}' + \left[ \sin(\theta)\sin\left(\frac{\pi}{2} - \phi + \xi\right) \right] \hat{\mathbf{x}}'$$

correspondants aux directions de propagation des ordres de diffraction n et m (nombres entiers relatifs) du premier et du second réseau respectivement. Les angles $\theta$ et $\phi$ sont respectivement les angles polaire et azimutal, et $\lambda$ la longueur d'onde correspondant au faisceau incident. Alors les équations

$$(1) : \|\mathbf{V}_1\| \approx n_{f1}$$

$$(2) : \|\mathbf{V}_2\| \approx n_{f2} \; ;$$

et

$$(3) : \mathbf{V}_1.\mathbf{V}_2 = 0$$

traduisent respectivement: la condition d'excitation du premier mode via le premier réseau, la condition d'excitation du second mode via le second réseau, et la condition d'orthogonalité entre eux des champs des deux modes excités. Il est possible de trouver, un ensemble de couples $(\theta, \phi)$ d'angles d'incidence polaire et azimutal, tel que les équations (1) et (2) sont vérifiées pour la même longueur d'onde d'incidence $\lambda$. Le premier et le second mode sont alors excités simultanément (les relations de dispersions sont dégénérées). Le filtre est donc accordable en fonction des angles d'incidence polaire et azimutal. De plus, pour un couple $(\theta_0, \phi_0)$ de cet ensemble, l'équation (3) est, elle aussi, vérifiée. Les directions de propagation des modes sont alors orthogonales entre elles, ainsi que leurs champs, et le filtre est indépendant de la polarisation. Cette propriété est relativement bien conservée autour du point $(\phi_0, \phi_0)$ : le filtre est indépendant de la polarisation et accordable en longueur d'onde en fonction de l'incidence, autour de ce point.

En particulier, lorsque les réseaux sont identiques, on a $d_1=d_2=d$, et lorsque, en plus les deux guides d'onde sont identiques on a $n_{f1}=n_{f2}$. L'ensemble des couples d'angles d'incidence polaire et azimutal, tels que les équations (1) et (2) sont vérifiées pour la même longueur d'onde d'incidence $\lambda$, est alors tel que $\theta$ varie de $-\pi/2$ à $\pi/2$ radians, et $\phi = \pi/4 + \xi/2$ radians quel que soit $\theta$. Les premier et second modes de propagation peuvent être excités simultanément quel que soit l'angle d'incidence polaire, sans modifier l'angle d'incidence azimutal, et donc sans modifier la direction du plan d'incidence. Les relations de dispersions sont dégénérées, quel que soit l'angle d'incidence polaire, lorsque l'angle d'incidence azimutal est $\phi = \pi/4 + \xi/2$ : le filtre est accordable en longueur d'onde en fonction de l'angle d'incidence polaire, lorsque le plan d'incidence contient la bissectrice des directions de périodicité des deux réseaux. De plus, pour un angle $\theta_0$, et une longueur d'onde $\lambda_0$, les directions de propagation des modes sont orthogonales entre elles, ainsi que leurs champs, et le filtre est indépendant de la polarisation. Cette propriété est conservée sur un large intervalle d'angles d'incidence polaire autour de $\theta_0$: le filtre est indépendant de la polarisation et accordable en longueur d'onde en fonction de l'incidence, autour de ce point.

Le choix de l'angle $\xi$ et de la période d permet que, lorsque le premier réseau est éclairé par un faisceau incident tel que le plan d'incidence contient la bissectrice des directions de périodicité des deux réseaux, les premier et second modes de propagation sont orthogonaux pour un angle d'incidence de conception $\theta_0$ et une longueur d'onde de conception (ou d'intérêt) $\lambda_0$ du faisceau lumineux déterminé.

Le choix de la période d et l'orientation relative (angle $\xi$ entre les réseaux) de leurs traits permettent de réfléchir ou non un faisceau lumineux de polarisation quelconque, uniquement en fonction de son angle d'incidence et de sa longueur d'onde.

On obtient alors un filtre optique spectralement sélectif et accordable et qui est indépendant de la polarisation du faisceau incident.

De manière avantageuse, les guides d'ondes sont chacun constitués par une pluralité de couches en matériau transparents à la longueur d'onde d'intérêt.

De préférence, les guides d'onde 21, 21' sont chacun constitués par deux couches de matériau diélectrique d'indice de réfraction différent.

De manière avantageuse, les matériaux utilisés pour former les guides d'ondes sont choisis tels qu'au moins l'un d'entre eux possède un indice de réfraction supérieur à l'indice de réfraction du substrat 31 disposé entre les deux guides d'ondes.

Exemple de réalisation particulière

On décrit ici une réalisation particulière d'un filtre optique conforme à l'invention qui a été testé numériquement.

L'empilement des différentes couches constituant le filtre optique peut être effectué par une technique connue du type LPCVD (en anglais, « *Low Pressure Chemical Vapor Deposition* »).

La formation des réseaux peut se faire par lithographie optique suivie d'une gravure humide.

D'autres techniques connues de l'homme du métier peuvent être utilisées pour la réalisation du filtre optique.

On considère que l'angle d'incidence de conception est $\theta_0=15°$ que la longueur d'onde d'intérêt est $\lambda_0 = 1,6\mu m$,

que les ordres de diffraction choisis pour exciter les premier et second modes sont m=-1 et n=-1, ce qui conduit à $\xi$ = -11° ($\phi$=50,5°) et à une période d=838nm. L'espace entre les rainures est $D_1=D_2=300$ nm et la hauteur de chaque rainure est h=70nm, ce qui conduit à une bande passante de filtrage de 0,12nm. Les guides d'onde 21, 21' sont constitués d'un empilement de deux couches 22, 23 de matériau d'indices de réfraction $n_{22}=1,47$ et $n_{23}=2,07$ et de hauteur $h_{22}=140,4$ nm, $h_{23}=310,2$ nm.

En outre, entre les guides d'ondes 21, 21' un substrat 31 d'indice de réfraction $n_{31}=1,448$ et d'épaisseur $h_{31}=350\mu$m est disposé.

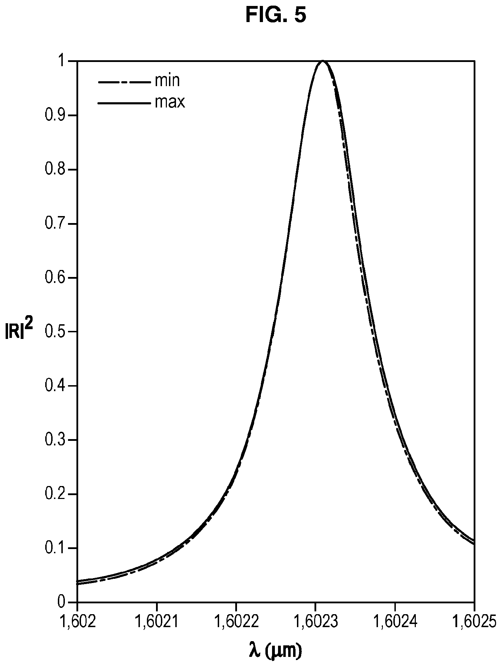

La figure 5 illustre les valeurs maximale et minimale, lorsque la polarisation de l'onde incidente décrit l'ensemble des états de polarisation accessibles du le coefficient de réflexion en fonction de la longueur d'onde du filtre optique ci-dessus

Sur cette figure, on constate qu'à la résonance le coefficient de réflexion est de 100% et les courbes minimale (traits discontinus) et maximale (traits pleins) sont superposées ce qui indique que le pic de résonance est indépendant de la polarisation.

## Revendications

1.    Filtre optique insensible à la polarisation centré sur une longueur d'onde ($\lambda_0$) mesurée dans le vide, comprenant :

- un premier et un second guides d'ondes (21, 21') supportant chacun un mode de propagation ;
- un premier réseau (11) formé dans ou sur la surface du premier guide d'onde (21), le premier réseau étant périodique au moins selon un premier axe Ox définissant une première base orthonormée Oxyz ;
- un second réseau (11') formé dans ou sur la surface du second guide d'onde (21'), le second réseau étant périodique au moins selon un second axe Oy' définissant une seconde base orthonormée Ox'y'z ;
- le premier et le second réseaux sont disposés l'un au-dessus de l'autre, l'axe Oz étant normal à la surface des guides d'ondes, et sont tels que le premier axe Ox et le second axe Oy' forment un angle de $\pi$ /2 + $\xi$ radians de manière à ce que lorsque le premier réseau est éclairé par un faisceau lumineux, les premier et second modes de propagation sont excités, et leurs champs sont orthogonaux pour un angle d'incidence du faisceau lumineux déterminé,
- les directions de propagation $\mathbf{V}_1$, $\mathbf{V}_2$ des ordres de diffraction n et m, n et m étant des nombres entiers relatifs, du premier et du second réseau étant définies par

$$\mathbf{V}_1 = \left[ \sin(\theta)\cos(\phi) - \frac{n\lambda}{d_1} \right] \hat{\mathbf{x}} + \left[ \sin(\theta)\sin(\phi) \right] \hat{\mathbf{y}}$$

$$\mathbf{V_2} = \left[ \sin(\theta)\cos\left( \frac{\pi}{2} - \phi + \xi \right) - \frac{m\lambda}{d_2} \right] \hat{\mathbf{y}}' + \left[ \sin(\theta)\sin\left( \frac{\pi}{2} - \phi + \xi \right) \right] \hat{\mathbf{x}}' ,$$

avec $\theta$ et $\phi$ sont respectivement les angles polaire et azimutal, et $\lambda$ la longueur d'onde correspondant au faisceau incident, la condition d'excitation du premier mode via le premier réseau étant $\|\mathbf{V}_1\| \approx n_{f1}$, la condition d'excitation du second mode via le second réseau étant $\|\mathbf{V}_2\| \approx n_{f2}$, la condition d'orthogonalité entre les champs des deux modes excités se traduisant par $\mathbf{V}_1 \cdot \mathbf{V}_2 = 0$.

2.    Filtre optique selon la revendication 1, dans lequel le premier réseau et le second réseaux sont identiques et comportent chacun une série de motifs ou rainures identiques de période $d=d_1=d_2$ et dans lequel l'angle $\xi$ entre le premier axe Ox et le second axe Ox' est ajusté de manière telle qu'un faisceau lumineux éclairant le premier réseau selon une direction d'incidence quelconque, pour l'angle polaire $\theta$, correspondant à ce faisceau lumineux , variant de -$\pi$/2 à $\pi$/2 radians, l'angle azimutal $\phi$, correspondant au faisceau incident égal à $\pi$/4 + $\xi$/2 radians.

3.    Filtre optique selon la revendication précédente, dans lequel la série de motifs ou rainures identiques sont de largeur D, et de hauteur h.

4.    Filtre optique selon la revendication précédente, dans lequel la longueur d'onde est égale à $\lambda_0$ = 1,6$\mu m$, les réseaux ont des rainures de période d=838 nm, de largeur D=300 nm et de hauteur h=70nm.

5. Filtre optique selon l'une des revendications précédentes, dans lequel le premier guide d'onde et le second guide d'onde sont identiques et sont chacun constitués par une pluralité de couches en matériau transparents à la longueur d'onde d'intérêt.

6. Filtre optique selon la revendication précédente, dans lequel le premier guide d'onde et le second guide d'onde sont constitués chacun par deux couches de matériau diélectrique d'indice de réfraction différent.

7. Filtre optique selon l'une des revendications précédentes, comprenant un substrat de verre disposé entre le premier guide d'onde et le second guide d'onde.

8. Filtre optique selon l'une des revendications précédentes, comprenant des réseaux de dimension de périodicité supérieure à un, typiquement 2D.

9. Filtre optique selon l'une des revendications précédentes, comprenant un substrat de verre disposé entre le premier réseau et le second réseau.

10. Filtre optique selon l'une des revendications précédentes, comprenant un substrat de verre disposé entre le premier réseau et le second guide d'onde.

## Patentansprüche

1. Polarisations-unempfindlicher optischer Filter, der auf eine im Vakuum gemessene Wellenlänge ($\lambda_0$) zentriert ist, welcher Folgendes umfasst:

   - einen ersten und einen zweiten Wellenleiter (21, 21'), die jeweils eine Ausbreitungsart unterstützten;
   - ein erstes Netz (11), das in oder auf der Oberfläche des ersten Wellenleiters (21) gebildet ist, wobei das erste Netz mindestens in einer ersten Achse Ox, die eine erste orthonormierte Basis Oxyz definiert, periodisch ist;
   - ein zweites Netz (11'), das in oder auf der Oberfläche des zweiten Wellenleiters (21') gebildet ist, wobei das zweite Netz mindestens in einer zweiten Achse Oy', die eine zweite orthonormierte Basis Ox'y'z definiert, periodisch ist;
   - das erste und das zweite Netz sind übereinander angeordnet, wobei die Achse Oz senkrecht zur Oberfläche der Wellenleiter ist, und sind derart, dass die erste Achse Ox und die zweite Achse Oy' einen Winkel von $-\pi/2+\xi$ rad bilden, so dass, wenn das erste Netz von einem Lichtstrahl beleuchtet wird, die erste und zweite Ausbreitungsart erregt werden, und ihre Felder für einen bestimmten Einfallwinkel des Lichtstrahls orthogonal sind,
   - wobei die Ausbreitungsrichtungen $V_1$, $V_2$ der Beugungsordnungen n und m, wobei n und m Ganzzahlen sind, des ersten und des zweiten Netzes definiert sind durch

$$\mathbf{V_1} = \left[ \sin(\theta)\cos(\phi) - \frac{n\lambda}{d_1} \right]\hat{\mathbf{x}} + \left[ \sin(\theta)\sin(\phi) \right]\hat{\mathbf{y}}$$

$$\mathbf{V_2} = \left[ \sin(\theta)\cos\left( \frac{\pi}{2} - \phi + \xi \right) - \frac{m\lambda}{d_2} \right]\hat{\mathbf{y}}' + \left[ \sin(\theta)\sin\left( \frac{\pi}{2} - \phi + \xi \right) \right]\hat{\mathbf{x}}' ,$$

   worin $\theta$ und $\phi$ jeweils der Pol- bzw. Azimutwinkel sind und $\lambda$ die dem einfallenden Strahl entsprechende Wellenlänge, wobei die Erregungsbedingung der ersten Art über das erste Netz $\|V_1\| \approx n_{f1}$ ist, die Erregungsbedingung der zweiten Art über das zweite Netz $\|V_2\| \approx n_{f2}$ ist, die Orthogonalitätsbedingung zwischen den Feldern der zwei erregten Arten sich durch $V_1 \cdot V_2 = 0$ ausdrückt.

2. Optischer Filter nach Anspruch 1, wobei das erste Netz und das zweite Netz identisch sind und jeweils eine Reihe an identischen Motiven oder Rillen der Periode $d=d_1=d_2$ enthalten und in welchem der Winkel $\xi$ zwischen der ersten Achse Ox und der zweiten Achse Ox' derart angepasst ist, dass ein Lichtstrahl, der das erste Netz in einer beliebigen Einfallrichtung beleuchtet, für den Polwinkel $\theta$, der diesem Lichtstrahl entspricht, von $-\pi/2$ bis $\pi/2$ rad variiert, und der Azimutwinkel $\phi$, der dem einfallenden Strahl entspricht, gleich $n/4 + \xi/2$ rad ist.

3. Optischer Filter nach dem vorstehenden Anspruch, wobei die Reihe der identischen Motive oder Rillen die Breite D und die Höhe h besitzen.

4. Optischer Filter nach dem vorstehenden Anspruch, wobei die Wellenlänge gleich $\lambda_0$ = 1,6 $\mu$m ist, die Netze Rillen der Periode d = 838 nm, der Breite D = 300 nm und der Höhe h = 70 nm besitzen.

5. Optischer Filter nach einem der vorstehenden Ansprüche, wobei der erste Wellenleiter und der zweite Wellenleiter identisch sind und jeweils aus einer Mehrzahl an Materialschichten bestehen, die für die interessierende Wellenlänge durchlässig sind.

6. Optischer Filter nach dem vorstehenden Anspruch, wobei der erste Wellenleiter und der zweite Wellenleiter jeweils aus zwei Schichten aus dielektrischem Material mit unterschiedlichem Brechungsindex bestehen.

7. Optischer Filter nach einem der vorstehenden Ansprüche, welcher ein zwischen dem ersten Wellenleiter und dem zweiten Wellenleiter angeordnetes Glassubstrat umfasst.

8. Optischer Filter nach einem der vorstehenden Ansprüche, welcher Netze einer Periodizitätsdimension größer eins, typischerweise 2D, umfasst.

9. Optischer Filter nach einem der vorstehenden Ansprüche, welcher ein zwischen dem ersten Netz und dem zweiten Netz angeordnetes Glassubstrat umfasst.

10. Optischer Filter nach einem der vorstehenden Ansprüche, welcher ein zwischen dem ersten Netz und dem zweiten Wellenleiter angeordnetes Glassubstrat umfasst.

**Claims**

1. Optical filter insensitive to polarisation centred on a wavelength ($\lambda_0$) measured in a vacuum, comprising:

   -- a first and a second waveguide (21, 21') each supporting a propagation mode;
   -- a first grating (11) formed in or on the surface of the first waveguide (21), the first grating being periodic at least along a first axis Ox defining a first orthonormal base Oxyz;
   -- a second grating (11') formed in or on the surface of the second waveguide (21'), the second grating being periodic at least along a second axis Oy' defining a second orthonormal base Ox'y'z;

   - the first and the second gratings are arranged above each other, the Oz axis being normal to the surface of the waveguides, and are such that the first axis Ox and the second axis Oy' form an angle of $\pi/2+\xi$ radians such that, when the first grating is illuminated by a light beam, the first and second propagation modes are excited and their fields are orthogonal for an angle of incidence of the determined light beam,
   - the directions of propagation $V_1$, $V_2$ of the orders of diffraction n and m, n and m being relative integers, of the first and second grating being defined by

$$\mathbf{V}_1 = \left[ \sin(\theta)\cos(\phi) - \frac{n\lambda}{d_1} \right]\hat{\mathbf{x}} + \left[ \sin(\theta)\sin(\phi) \right]\hat{\mathbf{y}}$$

$$\mathbf{V}_2 = \left[ \sin(\theta)\cos\left(\frac{\pi}{2}-\phi+\xi\right) - \frac{m\lambda}{d_2} \right]\hat{\mathbf{y}}' + \left[ \sin(\theta)\sin\left(\frac{\pi}{2}-\phi+\xi\right) \right]\hat{\mathbf{x}}',$$

   with $\theta$ and $\phi$ being respectively polar and azimuth angles, and $\lambda$ the wavelength corresponding to the incidental beam, the excitation of the first mode via the first grating being $\|V_1\| \approx n_{f1}$, the excitation of the second mode via the second grating being $\|V_2\| \approx n_{f2}$, the orthogonality between the fields of the two excited mode being translated by $V_1.V_2=0$.

2. Optical filter according to claim 1, in which the first grating and the second grating are identical and each comprises a series of patterns or identical grooves of period $d=d_1=d_2$ and in which the angle $\xi$ between the first axis Ox and the second axis Ox' is adjusted in such a manner that a light beam illuminates the first grating from any angle of incidence, for the polar angle $\theta$, corresponding to this light beam, varying from -n/2 to n/2 radians, the azimuth angle $\Phi$, corresponding to the incident beam equal to $\pi/4+\xi/2$ radians.

3.  Optical filter according to the preceding claim, in which the series of patterns or identical grooves has a width D, and height h.

4.  Optical filter according to the preceding claim, in which the wavelength is equal to $\lambda_0$=1.6 $\mu$m, the gratings have grooves of period d=838 nm, width D=300 nm and height h=70 nm.

5.  Optical filter according to any one of the preceding claims, in which the first waveguide and the second waveguide are identical and are each constituted by a plurality of layers made of material transparent to the wavelength of interest.

6.  Optical filter according to the preceding claim, in which the first waveguide and the second waveguide are each constituted by two layers of dielectric material with a different refractive index.

7.  Optical filter according to any one of the preceding claims, comprising a glass substrate arranged between the first waveguide and the second waveguide.

8.  Optical filter according to any one of the preceding claims, comprising gratings of periodicity dimension greater than one, typically 2D.

9.  Optical filter according to any one of the preceding claims, comprising a glass substrate arranged between the first grating and the second grating.

10. Optical filter according to any one of the preceding claims, comprising a glass substrate arranged between the first grating and the second waveguide.

FIG. 1

FIG. 2

## FIG. 3

## FIG. 4

## FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2856804 A1
- EP 1767964 A